# EUROPEAN PATENT APPLICATION

(11) **EP 4 310 998 A1**
(43) Date of publication of application: **24.01.2024**
(21) Application number: 22771194.2
(22) Date of filing: 08.03.2022
(51) Int. Cl.: H01M 50/107, H01M 50/119, H01M 50/531, H01M 50/534, H01M 50/545

(54) **SEALED BATTERY**

(30) Priority: 17.03.2021 JP 2021043474
(71) Applicant: Panasonic Energy Co., Ltd., Osaka 570-8511 (JP)
(72) Inventor: OKIMOTO, Ryota, Kadoma-shi, Osaka 571-0057 (JP)
(74) Representative: Novagraaf International SA
(86) International application number: PCT/JP2022/009996
(87) International publication number: WO 2022/196442

(57) **Abstract**

Provided is a low-resistance sealed battery in which solidification cracking of a weld part of a negative electrode lead and an outer can is inhibited. A sealed battery according to one aspect of the present disclosure comprises: an electrode body obtained by winding a positive electrode and a negative electrode with a separator therebetween; a bottomed cylinder-shaped outer can that accommodates the electrode body; and a sealing body that blocks an opening part of the outer can. The outer can and a negative electrode lead connected to the negative electrode are welded at a weld part formed from the outside surface of the outer can to the negative electrode lead. The outer can is composed of a metal including Fe, the negative electrode lead is composed of a metal having Cu as a principal ingredient, and the Cu concentration of the weld part is 10 mass% or less.

## Description

### TECHNICAL FIELD

The present disclosure relates to a sealed battery.

### BACKGROUND

As a negative electrode lead that connects between a negative electrode and an outer can in the interior of a sealed battery, there has been used a Ni lead or a clad material obtained by forming, on a surface of a Cu core, a Ni cladding layer having a thickness approximately equal to that of Cu. Patent Literature 1 discloses a secondary battery in which a negative electrode lead made of Ni-plated Cu is used to connect between a negative electrode and an outer can, and the negative electrode lead and the outer can are connected by resistance welding. According to resistance welding, only parts near the interface between the negative electrode lead and the outer can are joined by welding, so that there are difficulties in increasing the joining strength. If the output of resistance welding is increased in order to increase the joining strength, spatters would be scattered inside the battery, which would cause the problem of increased risk of short circuit. Patent Literature 2 discloses a method of welding a negative electrode lead and an outer can using a laser in order to prevent generation of spatters.

### CITATION LIST

### PATENT LITERATURE

PATENT LITERATURE 1: Japanese Unexamined Patent Application Publication No.
PATENT LITERATURE 2: Japanese Unexamined Patent Application Publication No. 2010-3686

### SUMMARY

### TECHNICAL PROBLEM

In recent years, there has been a demand for higher output in sealed batteries. In order to increase battery output, it is preferable to use Cu, which has a low electrical resistivity, as the main component of the negative electrode lead. However, since Cu forms a monotectic alloy with Fe which is the main component of the outer can, during a melting and solidifying process performed when the outer can and the negative electrode lead are laser-welded together, Fe and Cu tend to separate into two phases, and solidification cracking easily occurs at the welded portion between the negative electrode lead and the outer can. In the techniques described in Patent Literature 1 and 2, consideration has not been made regarding solidification cracking, and there is still room for improvement.

An object of the present disclosure is to provide a low-resistance sealed battery in which solidification cracking at the welded portion between the negative electrode lead and the outer can is suppressed.

### SOLUTION TO PROBLEM

A sealed battery according to one aspect of the present disclosure includes: an electrode assembly obtained by winding a positive electrode and a negative electrode with an interposed separator; a bottomed cylindrical outer can that houses the electrode assembly; and a sealing assembly that closes an opening of the outer can. The outer can and a negative electrode lead connected to the negative electrode are welded together at a welded portion formed from an outer surface of the outer can into the negative electrode lead. The outer can is made of a metal containing Fe, and the negative electrode lead is made of a metal containing Cu as a main component. Cu concentration in the welded portion is 10 % by mass or less.

### ADVANTAGEOUS EFFECTS OF INVENTION

According to the sealed battery according to one aspect of the present disclosure, output and reliability can be improved.

### BRIEF DESCRIPTION OF DRAWINGS

[FIG. 1] FIG. 1 is an axial cross-sectional view of a cylindrical secondary battery according to an example embodiment.
[FIG. 2] FIG. 2 is an enlarged cross-sectional view of a welded portion between an outer can and a negative electrode lead in the example embodiment.

### DESCRIPTION OF EMBODIMENTS

A cylindrical non-aqueous electrolyte secondary battery (hereinafter referred to as "secondary battery"), which is an example embodiment of a sealed battery according to the present disclosure, will be described in detail below by reference to the drawings. In the following description, specific shapes, materials, numerical values, directions, and the like are given as examples for facilitating understanding of the present invention, and may be changed as appropriate in accordance with specifications of the cylindrical secondary battery. The outer can is not limited to being cylindrical, and may for example be rectangular or the like. Further, when the following description refers to a plurality of embodiments or variants, it is envisioned from the beginning that characteristic features thereof may be used in combination as appropriate.

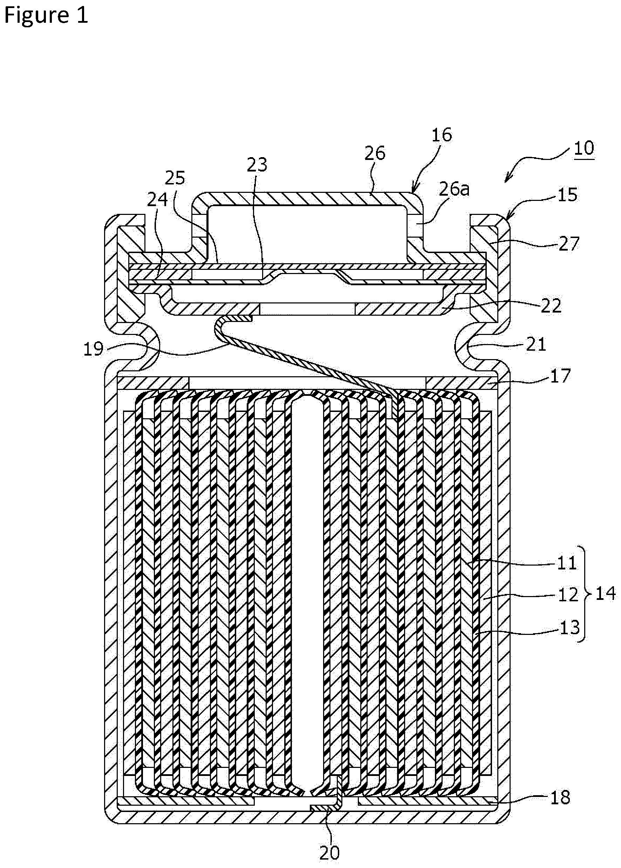

FIG. 1 is an axial cross-sectional view of a secondary battery 10 according to an example embodiment. In the secondary battery 10 shown in FIG. 1, an electrode assembly 14 and a non-aqueous electrolyte (not shown in drawing) are housed in an outer can 15. As a non-aqueous solvent (organic solvent) of the electrolyte solution, it is possible to use carbonates, lactones, ethers, ketones, esters, and the like, and these solvents can be used by mixing two or more types thereof. When two or more types of solvents are to be mixed and used, it is preferable to use a mixed solvent containing a cyclic carbonate and a chain carbonate. For example, ethylene carbonate (EC), propylene carbonate (PC), butylene carbonate (BC), and the like can be used as the cyclic carbonate, and dimethyl carbonate (DMC), ethyl methyl carbonate (EMC), diethyl carbonate (DEC), and the like can be used as the chain carbonate. As an electrolyte salt of the electrolyte solution, it is possible to use LiPF₆, LiBF₄, LiCF₃SO₃, and the like, as well as mixtures thereof. The amount of the electrolyte salt dissolved in the non-aqueous solvent can be, for example, 0.5 to 2.0 mol/L. In the following, for convenience of explanation, a side toward a sealing assembly 16 will be described as "upper", and a side toward the bottom portion of the outer can 15 will be described as "lower".

The electrode assembly 14 has a spiral structure formed by winding a positive electrode 11 and a negative electrode 12 with an interposed separator 13. The positive electrode 11, the negative electrode 12, and the separator 13 are all formed in a strip shape, and spirally wound around a winding core arranged along a winding axis so as to be placed in a state of being alternately laminated in the radial direction of the electrode assembly 14.

The positive electrode 11 comprises a strip-shaped positive electrode current collector and a positive electrode mixture layer formed on both sides of the positive electrode current collector. As the positive electrode current collector, for example, a foil of a metal such as aluminum, a film having such a metal disposed on its surface layer, or the like is used. The thickness of the positive electrode current collector is, for example, 10 µm to 30 µm.

The positive electrode mixture layer preferably contains a positive electrode active material, a conductive agent, and a binder. The positive electrode mixture layer can be produced, for example, by applying a positive electrode mixture slurry containing the positive electrode active material, the conductive agent, the binder, and a solvent such as N-methyl-2-pyrrolidone (NMP) onto both sides of the positive electrode current collector, drying the applied slurry, and then rolling the product.

On the positive electrode 11, there is provided a positive electrode exposed portion where a surface of the positive electrode current collector is exposed. The positive electrode exposed portion is a portion to which a positive electrode lead 19 described later is connected, and is where a surface of the positive electrode current collector is not covered with the positive electrode mixture layer. The positive electrode exposed portion is preferably provided on both sides of the positive electrode 11 at positions overlapping each other in the thickness direction of the positive electrode 11. The positive electrode lead 19 is joined to the positive electrode exposed portion by, for example, ultrasonic welding.

The positive electrode exposed portion is provided, for example, at a position substantially equidistant from an inner winding end portion and an outer winding end portion of the electrode assembly 14. According to this feature, current collection property is improved. By connecting the positive electrode lead 19 to the positive electrode exposed portion provided at such a position, when the electrode assembly 14 is wound, the positive electrode lead 19 is arranged substantially at the midpoint, in the radial direction, of the electrode assembly 14 in a manner protruding upward from an end face, in the width direction, of the electrode assembly 14. The positive electrode exposed portion is formed, for example, by intermittent application of the positive electrode mixture slurry, according to which the slurry is not applied to a part of the positive electrode current collector.

Examples of the positive electrode active material contained in the positive electrode mixture layer include lithium transition metal oxides containing transition metal elements such as Co, Mn, and Ni. The lithium transition metal oxides are, for example, LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (where M is at least one of Na, Mg, Sc, Y, Mn, Fe, Co, Ni, Cu, Zn, Al, Cr, Pb, Sb, and B; 0 < x ≤ 1.2, 0 < y ≤ 0.9, and 2.0 ≤ z ≤ 2.3). A single type among these may be used alone, or a plurality of types may be mixed and used. In terms of enabling an increase in capacity of the non-aqueous electrolyte secondary battery, the positive electrode active material preferably contains a lithium nickel composite oxide such as LiₓNiO₂, LixCo_{y}Ni_{1-y}O₂, and LiₓNi_{1-y}M_{y}O_{z}, (where M is at least one of Na, Mg, Sc, Y, Mn, Fe, Co, Ni, Cu, Zn, Al, Cr, Pb, Sb, and B; 0 < x ≤ 1.2, 0 < y ≤ 0.9, and 2.0 ≤ z ≤ 2.3).

Examples of the conductive agent contained in the positive electrode mixture layer include carbon-based particles such as carbon black (CB), acetylene black (AB), Ketjen black, carbon nanotubes (CNTs), graphene, and graphite. These may be used alone or by combining two or more thereof.

Examples of the binder contained in the positive electrode mixture layer include fluororesins such as polytetrafluoroethylene (PTFE) and polyvinylidene fluoride (PVdF), polyacrylonitrile (PAN), polyimide resins, acrylic resins, and polyolefin resins. A single type among these may be used alone, or two or more types may be used in combination. In cases where the positive electrode mixture slurry is prepared using an aqueous solvent, it is possible to use styrene-butadiene rubber (SBR), nitrile rubber (NBR), CMC or a salt thereof, polyacrylic acid (PAA) or a salt thereof, polyvinyl alcohol, or the like.

The negative electrode 12 comprises a strip-shaped negative electrode current collector and a negative electrode mixture layer formed on both sides of the negative electrode current collector. As the negative electrode current collector, for example, a foil of a metal such as copper, a film having such a metal disposed on its surface layer, or the like is used. The thickness of the negative electrode current collector is, for example, 5 µm to 30 µm.

The negative electrode mixture layer contains, for example, a negative electrode active material and a binder. The negative electrode mixture layer can be produced, for example, by applying a negative electrode mixture slurry containing the negative electrode active material, the binder, and a solvent such as water onto both sides of the negative electrode current collector, drying the applied slurry, and then rolling the product.

On the negative electrode 12, there is provided a negative electrode exposed portion where a surface of the negative electrode current collector is exposed. The negative electrode exposed portion is a portion to which the negative electrode lead 20 described later is connected, and is where a surface of the negative electrode current collector is not covered with the negative electrode mixture layer. The negative electrode exposed portion is preferably provided on both sides of the negative electrode 12 at positions overlapping each other in the thickness direction of the negative electrode 12. The negative electrode lead 20 is joined to the negative electrode exposed portion by, for example, ultrasonic welding.

The negative electrode exposed portion is provided, for example, at the inner winding end portion or the outer winding end portion of the electrode assembly 14. The negative electrode lead 20 may be joined to either one of the inner winding end portion or the outer winding end portion of the electrode assembly 14. Alternatively, the negative electrode lead 20 may be joined to both of the inner winding end portion and the outer winding end portion of the negative electrode 12. In that case, current collection property is improved. By configuring such that a negative electrode exposed portion located at the outer winding end portion of the negative electrode 12 is placed in contact with the inner periphery surface of the outer can 15 (see FIG. 1), it is also possible to electrically connect the outer winding end portion of the negative electrode 12 to the outer can 15 without using the negative electrode lead 20 at the outer winding end portion. The negative electrode exposed portion is formed, for example, by intermittent application of the negative electrode mixture slurry, according to which the slurry is not applied to a part of the negative electrode current collector.

The negative electrode active material contained in the negative electrode mixture layer is not particularly limited so long as it can reversibly occlude and release lithium ions, and it is possible to use, for example, a carbon-based material such as natural graphite or artificial graphite, a metal that forms an alloy with lithium such as Si or Sn, an alloy or oxide containing such metals, or the like.

Examples of the binder contained in the negative electrode mixture layer include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, or the like, or a partially neutralized salt), and polyvinyl alcohol (PVA). Further, the binder may contain fluororesins such as polytetrafluoroethylene (PTFE) and polyvinylidene fluoride (PVdF), polyacrylonitrile (PAN), polyimide resins, acrylic resins, polyolefin resins, and the like. A single type among these may be used alone, or two or more types may be used in combination.

Next, the positive electrode lead 19 and the negative electrode lead 20 will be described by reference to FIG. 1. At the upper end of the electrode assembly 14, the positive electrode lead 19 extends axially from a position located substantially at the midpoint in the radial direction between the center and the outermost periphery. The positive electrode lead 19 is made of Al, for example.

At the lower end of the electrode assembly 14, the negative electrode lead 20 extends axially from a position near the winding axis. The negative electrode lead 20 is made of a metal containing Cu as the main component. With this feature, resistance can be reduced, and the battery output can be improved.

The negative electrode lead 20 may have a Ni plating layer on its surface. That is, the negative electrode lead 20 may have a Ni plating layer on a surface of the metal containing Cu as the main component. With this, oxidation of Cu can be suppressed. From the perspective of suppressing oxidation of Cu, it is preferable that the Ni plating layer is formed on both sides of the metal containing Cu as the main component. In the following description, the Ni plating layer is formed on both sides of the metal containing Cu as the main component, and the thickness of the Ni plating layer denotes its thickness on one side of the metal containing Cu as the main component.

The portion of the negative electrode lead 20 excluding the Ni plating layer contains elements other than Cu only at an impurity level, and may substantially be composed of Cu alone. The content of elements other than Cu in the portion of the negative electrode lead 20 excluding the Ni plating is preferably 1 % by mass or less, more preferably 0.5 % by mass or less, and particularly preferably 0.1 % by mass or less.

The thickness of the negative electrode lead 20 (i.e., Cu thickness + Ni plating layer thickness) is, for example, 50 µm to 200 µm. The thickness of the Ni plating layer is preferably 0.1 µm to 20 µm, more preferably 0.5 µm to 10 µm, and particularly preferably 0.5 µm to 5 µm. When the thickness of the Ni plating layer is 0.1 µm or more, oxidation of Cu can be suppressed. From the perspective of cost reduction, the thickness of the Ni plating layer is preferably as small as possible within a range in which oxidation of Cu can be suppressed. The ratio of the thickness of the Ni plating layer relative to the thickness of the negative electrode lead 20 (i.e., (thickness of Ni plating layer) / (thickness of negative electrode lead)) is, for example, 0.005 to 0.2.

Next, a description will be given by reference to FIG. 1 regarding the manner of connection of the outer can 15 and the sealing assembly 16 to the electrode assembly 14 in the interior of the secondary battery 10.

The outer can 15 is a bottomed cylindrical container, and houses therein the electrode assembly 14, the non-aqueous electrolyte, and the like. The outer can 15 is made of a metal containing Fe. The outer can 15 is, for example, carbon steel. The thickness of the outer can 15 is, for example, 0.2 mm to 0.8 mm. Further, the outer can 15 may have a Ni plating layer on its surface, and may have the Ni plating layer formed on both of the inner surface and the outer surface. The thickness of the Ni plating layer on the surface of the outer can 15 is, for example, 0.1 µm to 10 µm.

The upper end portion of the outer can 15 is closed with the sealing assembly 16, and the interior of the secondary battery 10 is thereby hermetically sealed. Above and below the electrode assembly 14, insulation plates 17 and 18 are provided respectively. A positive electrode lead 19 extends upward through a through hole in the insulation plate 17, and is welded to the lower surface of a filter 22, which is the bottom plate of the sealing assembly 16. In the secondary battery 10, a cap 26, which is the top plate of the sealing assembly 16 electrically connected to the filter 22, serves as the positive electrode terminal. Meanwhile, a negative electrode lead 20 extends toward the bottom portion of the outer can 15 through a through hole in the insulation plate 18, and is welded to the inner surface of the bottom portion of the outer can 15. In the secondary battery 10, the outer can 15 serves as the negative electrode terminal.

A gasket 27 is provided between the outer can 15 and the sealing assembly 16 to ensure airtightness inside the secondary battery 10. The outer can 15 has a grooved portion 21 which is formed by, for example, pressing a side surface portion from the outside, and which supports the sealing assembly 16. The grooved portion 21 is preferably formed in an annular shape along the circumferential direction of the outer can 15, and supports the sealing assembly 16 on its upper face.

The sealing assembly 16 comprises the filter 22, a lower valve member 23, an insulation member 24, an upper valve member 25, and the cap 26, which are laminated in this order from the electrode assembly 14 side. Each of the members constituting the sealing assembly 16 has, for example, a disk shape or a ring shape, and the respective members except the insulation member 24 are electrically connected to each other. The lower valve member 23 and the upper valve member 25 are connected to each other at their central portions, and the insulation member 24 is interposed between peripheral edge portions of these valve members. When the internal pressure of the battery increases due to abnormal heat generation, for example, the lower valve member 23 ruptures, which causes the upper valve member 25 to swell toward the cap 26 and move away from the lower valve member 23, and the electrical connection between the two valve members is thereby cut off. When the internal pressure increases further, the upper valve member 25 ruptures, and gas is discharged from an opening 26a in the cap 26.

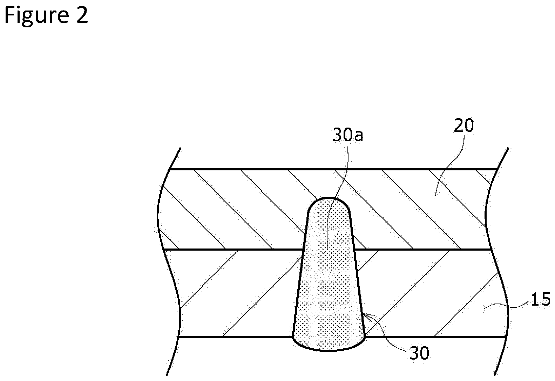

Next, the manner of connection between the outer can 15 and the negative electrode lead 20 will be described by reference to FIG. 2. FIG. 2 is an enlarged cross-sectional view of a welded portion 30 between the outer can 15 and the negative electrode lead 20 in the example embodiment.

The outer can 15 and the negative electrode lead 20 are welded together at a welded portion 30 formed from the outer surface of the outer can 15 into the negative electrode lead 20. The welded portion 30 passes through the bottom portion of the outer can 15, extending from the outer surface of the outer can 15 and reaching the interior of the negative electrode lead 20. The welded portion 30 is, for example, a melted and solidified portion of the outer can 15 and the negative electrode lead 20 formed by irradiating a laser on the outer surface of the outer can 15. That is, the welded portion 30 may be formed by irradiating a laser on the bottom portion of the outer can 15 from the outside of the secondary battery 10 while the negative electrode lead 20 is placed in contact with the inner surface of the outer can 15. The wavelength of the laser is not particularly limited so long as it is within a range absorbed by the outer can 15, and is, for example, 1060 nm to 1080 nm. The laser output is not particularly limited so long as the welded portion 30 as described above is formed.

Cu concentration in a contact part 30a, within the welded portion 30, between the negative electrode lead 20 and the outer can 15 is preferably 10 % by mass or less, and more preferably 8.6 % by mass or less. The welded portion 30 is an alloy formed by melting and solidifying the metal containing Fe constituting the outer can 15 and the metal containing Cu as the main component constituting the negative electrode lead 20. The Cu concentration in the welded portion 30 can be measured using an electron probe microanalyzer (EPMA). Depending on the welding conditions, the composition of the alloy formed in the welded portion may not be uniform. Therefore, measurement of the Cu concentration is preferably performed with respect to the center of the contact part 30a, within the welded portion 30, where the negative electrode lead 20 and the outer can 15 have been in contact with each other immediately before welding. The range to be measured is, for example, within 100 µm from the center of the contact part 30a. By controlling the Cu concentration measured in this manner to within the above-noted range, solidification cracking in the welded portion 30 is effectively suppressed. The contact part 30a is a part of the welded portion 30 which corresponds to the contact surface and its vicinity immediately before the negative electrode lead 20 and the outer can 15 are welded together. Presence or absence of solidification cracking in the welded portion 30 can be ascertained by observing the welded portion 30 with, for example, a scanning electron microscope (SEM).

### EXAMPLES

While the present disclosure will be further described below using Examples, the present disclosure is not limited to these Examples.

### <Example 1>

### [Production of Positive Electrode]

A lithium transition metal oxide represented by LiNi_{0.8}Co_{0.15}Al_{0.05}O₂ was used as a positive electrode active material. A positive electrode mixture slurry was prepared by mixing 100 parts by mass of the positive electrode active material, 2.5 part by mass of acetylene black (AB) as a conductive agent, and 1.7 parts by mass of polyvinylidene fluoride (PVdF) as a binder, and further adding thereto an appropriate amount of N-methyl-2-pyrrolidone (NMP). Next, this positive electrode mixture slurry was applied to both sides of a positive electrode current collector made of aluminum foil. After the applied slurry was dried, the product was cut into a predetermined electrode size and rolled using a roller, and a strip-shaped positive electrode was thereby obtained. At one end part in the lengthwise direction of the positive electrode, there was provided an uncoated portion in which no active material was formed, and one end of a positive electrode lead made of Al was fixed to this uncoated portion by ultrasonic welding.

### [Production of Negative Electrode]

Graphitizable carbon was used as a negative electrode active material. A negative electrode mixture slurry was prepared by mixing 100 parts by mass of the negative electrode active material, 0.6 parts by mass of styrene-butadiene rubber (SBR) as a binder, and 1 part by mass of carboxymethyl cellulose (CMC) as a thickener, and further adding thereto an appropriate amount of water. Next, this negative electrode mixture slurry was applied to both sides of a negative electrode current collector made of copper foil. After the applied slurry was dried, the product was cut into a predetermined electrode size and rolled using a roller, and a strip-shaped negative electrode was thereby obtained. At that time, an uncoated portion in which no active material was formed was provided at one end part in the lengthwise direction of the negative electrode. Further, there was provided a negative electrode lead having a thickness of 0.1 mm and having a Ni plating layer of a thickness of 1 µm formed on each of both sides of Cu. One end of the negative electrode lead was fixed to the uncoated portion by ultrasonic welding.

### [Preparation of Non-Aqueous Electrolyte]

Into a mixed solvent obtained by mixing ethylene carbonate (EC), ethyl methyl carbonate (EMC), and diethyl carbonate (DEC) so that the volume ratio of EC:EMC:DMC = 3:3:4, LiPF₆ was added at 1.0 mol/L, and a non-aqueous electrolyte was thereby prepared.

### [Production of Sealed Battery]

A spiral electrode assembly was produced by spirally winding the positive electrode and the negative electrode with an interposed separator made of polyolefin resin. With insulation plates arranged above and below the electrode assembly, the electrode assembly was housed in a bottomed cylindrical metal outer can. The thickness of the outer can was 0.4 mm, and a Ni plating layer having a thickness of 1 µm was provided on both sides of the outer can. Next, from the outside of the outer can, a fiber laser with a wavelength of 1070 nm was irradiated on the bottom portion of the outer can, and the negative electrode lead protruding from the electrode assembly was welded to the bottom portion of the outer can. A grooved portion was formed at the opening portion of the outer can by pressing, and the non-aqueous electrolyte was injected into the interior of the outer can. A gasket was received on the upper part of the grooved portion. After a sealing assembly was welded to the positive electrode lead, the opening portion of the outer can was sealed by being crimped to the sealing assembly via the gasket, and a sealed battery was thereby produced.

### <Example 2>

A battery was produced in the same manner as in Example 1 except that, in the production of the negative electrode, there was used a negative electrode lead having a thickness of 0.1 mm and having a Ni plating layer of a thickness of 3 µm formed on each of both sides of Cu.

### <Example 3>

A battery was produced in the same manner as in Example 1 except that, in the production of the negative electrode, there was used a negative electrode lead having a thickness of 0.1 mm and having a Ni plating layer of a thickness of 5 µm formed on each of both sides of Cu.

### <Example 4>

A battery was produced in the same manner as in Example 1 except that, in the production of the negative electrode, there was used a negative electrode lead having a thickness of 0.1 mm and having a Ni plating layer of a thickness of 10 µm formed on each of both sides of Cu.

### <Example 5>

A battery was produced in the same manner as in Example 1 except that, in the production of the negative electrode, there was used a negative electrode lead having a thickness of 0.1 mm and having no Ni plating layer formed on the surfaces.

### <Comparative Example 1>

A battery was produced in the same manner as in Example 1 except that, in the production of the sealed battery, the output of the fiber laser was increased.

### <Comparative Example 2>

A battery was produced in the same manner as in Example 2 except that, in the production of the sealed battery, the output of the fiber laser was the same as in Comparative Example 1.

### <Comparative Example 3>

A battery was produced in the same manner as in Example 3 except that, in the production of the sealed battery, the output of the fiber laser was the same as in Comparative Example 1.

### <Comparative Example 4>

A battery was produced in the same manner as in Example 4 except that, in the production of the sealed battery, the output of the fiber laser was the same as in Comparative Example 1.

### <Comparative Example 5>

A battery was produced in the same manner as in Example 5 except that, in the production of the sealed battery, the output of the fiber laser was the same as in Comparative Example 1.

### [Evaluation of Welded Portion]

From each of the batteries of the Examples and Comparative Examples, a part around the bottom portion of the outer can was cut out, embedded in epoxy resin, and then cut and polished to enable observation of a cross section as shown in FIG. 2. After that, the welded portion was observed with an SEM to ascertain whether or not solidification cracking has occurred, and in cases where solidification cracking has occurred, the length of the solidification cracking was measured. In addition, Cu concentration in the welded portion was measured using an EPMA.

Table 1 shows the evaluation results of the Examples and Comparative Examples.

**[Table 1]**

| | Composition of Welded Portion [mass%] | | | Solidification Cracking | |
|---|---|---|---|---|---|
| | Fe | Cu | Ni | Yes/No | Length [µm] |
| Example 1 | 90.3 | 8.6 | 1.1 | No | - |
| Example 2 | 90.3 | 7.7 | 2.0 | No | - |
| Example 3 | 91.4 | 5.5 | 3.1 | No | - |
| Example 4 | 89.8 | 4.9 | 5.3 | No | - |
| Example 5 | 90.8 | 9.1 | 0.1 | Yes | 8 |
| Comparative Example 1 | 85.8 | 13.2 | 1.0 | Yes | 41 |
| Comparative Example 2 | 82.1 | 15.3 | 2.6 | Yes | 71 |
| Comparative Example 3 | 72.8 | 21.9 | 5.3 | Yes | 94 |
| Comparative Example 4 | 67.6 | 19.6 | 12.8 | Yes | 67 |
| Comparative Example 5 | 83.1 | 16.8 | 0.1 | Yes | 60 |

In Examples 1 to 5, by controlling the Cu concentration in the welded portion to 10 % by mass or less, occurrence of solidification cracking could be suppressed as compared to in Comparative Examples 1 to 5. In Example 5, although solidification cracking did occur, the solidification cracking was not large enough to cause peeling of the negative electrode lead.

### REFERENCE SIGNS LIST

10 secondary battery; 11 positive electrode; inner winding end portion; 12 negative electrode; 13 separator; 14 electrode assembly; 15 outer casing; 16 sealing assembly; 17, 18 insulation plate; 19 positive electrode lead; 20 negative electrode lead; 21 grooved portion; 22 filter; 23 lower valve member; 24 insulation member; 25 upper valve member; 26 cap; 26a opening; 27 gasket; 30 welded portion; 30a contact part.

## Claims

1. A sealed battery, comprising: an electrode assembly obtained by winding a positive electrode and a negative electrode with an interposed separator; a bottomed cylindrical outer can that houses the electrode assembly; and a sealing assembly that closes an opening of the outer can, wherein
the outer can and a negative electrode lead connected to the negative electrode are welded together at a welded portion formed from an outer surface of the outer can into the negative electrode lead, and
the outer can is made of a metal containing Fe, the negative electrode lead is made of a metal containing Cu as a main component, and Cu concentration in the welded portion is 10 % by mass or less.

2. The sealed battery according to claim 1, wherein the Cu concentration in the welded portion is 8.6 % by mass or less.

3. The sealed battery according to claim 1 or 2, wherein the negative electrode lead has a Ni plating layer on its surface.

4. The sealed battery according to any one of claims 1 to 3, wherein the welded portion is a melted and solidified portion.

5. The sealed battery according to claim 4, wherein the melted and solidified portion is formed by irradiating a laser on the outer surface of the outer can.
